# EUROPEAN PATENT APPLICATION

(11) **EP 0 924 235 A2**
(43) Date of publication of application: **23.06.1999**
(21) Application number: 98310613.9
(22) Date of filing: 22.12.1998
(51) Int. Cl.: C08G 77/06, C07F 7/16

(54) **Method of hydrolyzing organochlorosilanes**

(30) Priority: 22.12.1997 US 995627
(71) Applicant: DOW CORNING CORPORATION, Midland, Michigan 48686-0994 (US)
(72) Inventor: Marko, Ollie William, Carrollton, Kentucky 41008 (US); McClure, Denise Lynne, Louisville, Kentucky 40243 (US)
(74) Representative: Lewin, John Harvey

(57) **Abstract**

A process is claimed herein for treating a plurality of by-product streams comprising chlorosilicon compounds. The process comprises the steps of determining the average SiCl functionality of said by-product streams, then blending at least two of these streams to form a blended by-product stream characterized by having an average SiCl functionality greater than or equal to 2.8, thereafter adding to the blended by-product stream a surfactant having a hydrophobic-lipophilic balance (HLB) number within range of 3 to 28, and finally contacting the resultant by-product stream with an aqueous medium at a temperature within a range of 50⁰C. to 120⁰C. to yield a granular siloxane gel.

## Description

The present invention is a process for treating a plurality of by-product streams comprising chlorosilicon compounds. The process comprises the steps of determining the average SiCl functionality of a plurality of by-product streams comprising chlorosilicon compounds, blending at least two of the by-product streams to form a blended by-product stream having an average SiCl functionality greater than or equal to 2.8, adding to the blended by-product stream a surfactant having a hydrophobic lipophilic balance (HLB) number within a range of about 3 to 28 and contacting the blended by-product stream with an aqueous medium at a temperature within a range of about 50°C. to 120°C. to form a granular siloxane gel.

U.S. Patent 4,221,691 teaches that the handling characteristics of a siloxane gel is significantly improved by the addition of a relatively small amount of hydrocarbon oil to a polyfunctional chlorosilicon composition before its hydrolysis. The term "polyfunctional chlorosilicon composition" was defined therein as "compositions containing a major proportion of chlorosilicon compounds with at least 3 chlorine radicals bonded to silicon per molecule". That patented method cannot be used to successfully hydrolyze many of the by-product or waste streams of a commercial silicone plant to produce a handleable gel since many of these streams may not contain sufficient polyfunctional chlorosilicon compounds. Furthermore, adding a hydrocarbon oil causes an additional expense in the waste treatment process.

Similarly, U.S. Patent 4,408,030 describes a process for treating a plurality of streams containing chlorosilicon compounds to obtain a solid siloxane material or gel that is easily handleable. However, the gels may sink, float and/or stay suspended in the aqueous acid phase thereby making the separation of these gels difficult.

U.S. Patents 4,960,523 and 4,961,861 further disclose a process for working up the high-boiling, solids-containing residues produced by the synthesis of organochlorosilanes, which are subsequently hydrolyzed and then oxidized. Said process comprises adding during hydrolysis and/or oxidation a surface-active agent which hydrophilicizes the surface of the solids.

The present invention provides a process for treating a plurality of by-product streams comprising chlorosilicon compounds to produce a siloxane gel that is non-sticky, easily handleable, has a finer, more uniform particle size and floats on the liquid surface thereby making a granular siloxane gel readily separable from the liquid phase than the gels previously described above. Furthermore, our invention surprisingly introduces a process by which diverse by-product streams of a commercial silicone plant are efficiently and economically hydrolyzed to reduce their chlorine content prior to disposal. Finally, the claimed invention provides a process for treating by-product chlorosilicon streams whereby hydrogen chloride is conveniently recovered and/or recycled.

The term "SiCl functionality" of a given chlorosilicon compound is defined as the number of Si-Cl bonds in the chlorosilicon compound. For example, the SiCl functionality, f, of several chlorosilicon compounds are given as follows: R₃SiCl, f=1; R₂SiCl₂, f=2; RSiCl₃, f=3; SiCl₄, f=4; RCl₂SiSiCl₂R, f=4; RCl₂SiSiClR₂; f=3; RCl₂SiOSiCl₃, f=5; Cl₃SiSiCl₃, f=6; etc., where R is a non-chlorine containing hydrocarbon radical. The average SiCl functionality of the by-product stream is the weighted average of the SiCl functionality of all SiCl containing compounds in the stream. The non SiCl containing compounds, and any unidentified compounds in the by-product stream, are not considered in the determining the average SiCl functionality. The relative amounts of all SiCl containing compounds are normalized to 100% for our determination of the average SiCl functionality in the by-product stream. In a similar fashion, the blended by-product stream average SiCl functionality is the weighted average of the SiCl functionality of all SiCl containing compounds in the blended streams where the relative amounts of the individual SiCl compound are normalized to 100%.

The average SiCl functionality of a plurality of by-product streams are readily determined by gas-liquid. chromatography (GLC) after the various components of a given stream have been identified. The combined techniques of GLC and mass spectrometry are very useful in making the initial identification of the SiCl compounds in a complex stream. Other conventional analytical techniques may also be used to determine the average SiCl functionality of the chlorosilicon content of the by-product streams.

The by-product streams typically contain chlorosilicon compounds including organic substituted silanes, non-organic substituted silanes, disilanes, disiloxanes, silane oligomers, siloxane oligomers, silphenylenes and silalkyllenes in which at least one Si-Cl bond is present. In addition to chlorosilicon compounds, the by-product streams may also contain solvents, suspended silica, metal fines, silica and silicon-containing compounds without any Si-Cl bonds. For example, toluene, benzene and ethylbenzene have been identified as by-products from the direct process for production of methylchlorosilanes.

In a preferred embodiment, the by-product streams contain the by-products from production of commercial chlorosilicon monomers. Suitable by-products include the high boiling residues from the direct process for production of methylchorosilanes, the Grignard synthesis of phenylmethylchlorosilanes, the synthesis of phenylchlorosilanes via the reaction of benzene and trichlorosilane and the synthesis of chlorosilanes. These by-products are complex mixtures that have little economic value because of the difficulty of separating the many components. The major components of these streams are chlorosilanes, chlorodisilanes, chlorodisiloxanes, chlorosilphenylenes and chlorosilalkylenes.

Chlorosilicon compound containing by-product streams, which are suitable for treatment by the present process, also include distillation residues, distillation waste cuts, filtration residues, by-product or waste materials from the production of commercial silanes, siloxane intermediates and siloxane polymers, or even off-specification materials.

After determining the average SiCl functionality of a plurality of by-product streams, at least two of the by-product streams are blended to form a blended by-product stream having an average SiCl functionality greater than or equal to 2.8. By-product streams with an average SiCl functionality less than 2.8, when employed in the process of our invention will yield an undesirable sticky paste.

In some cases, the order of various processing steps may be conveniently changed. For example, it may be more efficient to collect small samples of a plurality of by-product streams in a single holding tank, blend them and then determine the average SiCl functionality of the entire blended by-product streams. Blending must continue until the average SiCl functionality of said blended streams is within the desired SiCl functionality limit of our invention.

The blending of by-product streams to obtain the desired average SiCl functionality is easily achieved by standard methods such as stirring. The blending may also be conveniently carried out in a batch, semi-continuous or continuous mode.

The surfactants added herein to the blended by-product stream are described by formula HO(CH₂CH₂O)ₓ(CH₂CH₃CHO)_{y}(CH₂CH₂O)_{z}H, where x, y and z are selected such that the surfactant has an HLB number within the range of 3 to 28. Preferred is a HLB number within the range of 3 to 15, with most preferred being within the range of 3 to 7.

The surfactants useful in the present process are nonionic surfactants containing only carbon, hydrogen and oxygen. Anionic or cationic surfactants, and those containing sulfur, nitrogen and phosphorus, are less preferred because it is believed their chemical functionality may react with the chlorosilane or liberated hydrochloric acid and otherwise detrimentally impact the properties (stickiness) of the granular siloxane gel. Examples of suitable nonionic surfactants are ethylene oxide and propylene oxide block copolymers such as HO(CH₂CH₂O)(CH₂CH₃CHO)₈(CH₂CH₂O)H sold as Antarox®L-61, HO(CH₂CH₂O)(CH₂CH₃CHO)₈(CH₂CH₂O)₂H sold as Antarox®L-62, HO(CH₂CH₂O)(CH₂CH₃CHO)₈(CH₂CH₂O)₄H sold as Antarox®L-64 and HO(CH₂CH₂O)₂(CH₂CH₃CHO)₃(CH₂CH₂O)₈H sold as Antarox®F-88 FLK. These Antarox® surfactants formulas are expressed as composition averages and they are manufactured by Rhone-Poulenc, Cranbury, New Jersey, USA.

The surfactant concentration usually comprises from 0.5 to 50 weight percent of the blended by-product stream. The preferred surfactant concentration is from 1 to 10 weight percent on the same basis.

Our claimed blended by-product stream, with appropriate average SiCl functionality and a surfactant described by formula HO(CH₂CH₂O)ₓ(CH₂CH₃CHO)_{y}(CH₂CH₂O)_{z}H, where x, y and z are selected such that the surfactant has a HLB number within a range of 3 to 28 are contacted with an aqueous medium under agitation to facilitate hydrolysis of the chlorosilicon compound. The addition rate thereof to the aqueous medium and the agitation rate of the resulting mixture are conveniently used to control the particle size of the granular siloxane gel. The aqueous medium initially consists of only water; but after hydrolysis, the liberated hydrogen chloride will dissolve in said water. When the water becomes saturated with hydrogen chloride, gaseous hydrogen chloride will be evolved. The aqueous medium may also contain hydrochloric acid or an inorganic chloride salt initially; so gaseous hydrochloric acid is evolved even at the start of hydrolysis. Inorganic salts such as sodium chloride or calcium chloride are normally employed. The term "aqueous" as used herein excludes organic components such as alcohols which are also reactive with chlorosilicon compounds. In a preferred embodiment, gaseous hydrochloric acid is recovered from this hydrolysis and the aqueous medium essentially becomes a concentrated hydrogen chloride solution. The amount of aqueous medium employed can be varied widely; however, it is preferred that sufficient water be present to completely hydrolyze the chlorosilicon compounds present in our blended by-product streams.

The contact of said stream with the aqueous medium is conducted at a temperature between 50°C. inclusive, up to the boiling point of the aqueous medium. It is preferred that said contact occur at a temperature within a range of 60°C. to 90°C. If this contact is performed at temperatures significantly below 50°C., a sticky granular siloxane gel will result due to incomplete hydrolysis of the chlorosilicon compounds.

The hydrolysis reaction is endothermic when the aqueous medium comprises concentrated hydrochloric acid and heating may be necessary to maintain the claimed temperature range. When the aqueous medium is only water, the hydrolysis reaction is exothermic and cooling may be needed to control the reaction.

The contact of our blended by-product streams may be conducted at atmospheric, sub-atmospheric or superatmospheric pressures. Because of economic considerations, it is preferred that said hydrolysis be run at or near atmospheric pressure.

The present process provides granular siloxane gels that are non-sticky, easily handleable, have a finer, more uniform particle size and float on the liquid surface thereby making said gels readily separable from the liquid phase or aqueous medium. The claimed granular siloxane gels are easily removed from the liquid phase by any convenient manner, such as filtration or centrifugation.

In an alternative embodiment, the product granular siloxane gels are washed with water one or more times to reduce the chlorine content of the granular siloxane gel.

### Comparative Example

Samples were taken from a by-product storage tank containing a plurality of by-product streams containing chlorosilicon compounds. Each sample was analyzed using GLC and GLC-mass spectrometry to determine the GLC area percent of the by-product stream components. The utilized streams were categorized as "High Boiling Liquids" or "Distillation By-Products". The weight percent of each component of the High Boiling Liquids were recorded in Table 1 and the weight percent of each component of the Distillation By-Products were recorded in Table 2.

A 70/30 percent mixture of high boiling liquids and distillation by-products were then blended to form a blended by-product stream resulting from the direct process for making organochlorosilanes. This blended by-product stream was analyzed using GLC and determined to have an average SiCl functionality of 3.46. Next, it (200 g) was added to an agitated aqueous medium of 36 percent hydrochloric acid at 65°C. with stirring and hydrolyzed for 0.25 hour. Thereafter, the aqueous medium was removed by filtration. A non-uniform mixture of sinking, floating and suspended granular siloxane gels were formed.

### Example 1

The blended by-product stream of the Comparative Example was hydrolzed in the presence of two weight percent of a nonionic surfactant described by formula HO(CH₂CH₂O)(CH₂CH₃CHO)₈(CH₂CH₂O)H, purchased from Rhone-Poulenc, Cranbury, New Jersey, USA under the name Antarox®L-61. The surfactant had a HLB number of three which was experimentally determined or calculated by summing up the contributions of the surfactants' individual molecular structures. After the blended by-product stream was hydrolyzed, the aqueous medium was removed by filtration. The resulting granular siloxane gels had a finer, more uniform particle size, floated on the liquid surface and were easily separated from the liquid phase as compared to the granular siloxane gels of the Comparative Example.

### Example 2

The blended by-product stream of the Comparative Example was hydrolyzed in the presence of two weight percent of a nonionic surfactant described by formula HO(CH₂CH₂O)(CH₂CH₃CHO)₈(CH₂CH₂O)₂H, purchased from Rhone-Poulenc, under the name Antarox®L-62. The surfactant had a HLB number of seven which was determined or calculated as in Example 1. After the blended by-product stream was hydrolyzed, the aqueous medium was removed by filtration. The product granular siloxane gels were of a finer, more uniform particle size, floated on the liquid surface and were readily separated from the liquid phase as compared to the granular siloxane gels of the Comparative Example.

### Example 3

The blended by-product stream of the Comparative Example was hydrolyzed in the presence of two weight percent of a nonionic surfactant described by HO(CH₂CH₂O)(CH₂CH₃CHO)₈(CH₂CH₂O)₄H, purchased from Rhone-Poulenc, under the name Antarox®L-64. The surfactant had a HLB number of 15 which was determined or calculated as above. After the blended by-product stream was hydrolyzed, the aqueous medium was removed by filtration. The final granular siloxane gels were of a finer, more uniform particle size, floated on the liquid surface and were readily separated from the liquid phase as compared to the granular siloxane gels of Comparative Example 1.

### Example 4

The blended by-product stream of the Comparative Example was hydrolyzed in the presence of two weight percent of a nonionic surfactant described by HO(CH₂CH₂O)₂(CH₂CH₃CHO)₃(CH₂CH₂O)₈H, purchased from Rhone-Poulenc, under the name Antarox®F-88 FLK. The surfactant had a HLB number of 28 which was determined as above. After the blended by-product stream was hydrolyzed, the aqueous medium was removed by filtration. The resulting granular siloxane gels were of a finer, more uniform particle size, floated on the liquid surface and were readily separated from the liquid phase as compared to the granular siloxane gels of the Comparative Example.

**TABLE 1**

| High Boiling Liquids | |
|---|---|
| Component | Weight Percent |
| (SiCH₂Si)₁(Cl)₄(Me)₂ | 32 |
| (SiCH₂Si)₁(Cl)₅Me | 28 |
| (HSiOSi)₁(Cl)₃(Me)₂ | 4 |
| (SiOSi)₁(Cl)₄(Me)₂ | 4 |
| (SiCH₂Si)₁(Cl)₂(Me)₄ | 3 |
| (SiSi)₁(Cl)₄(Me)₂ | 1 |
| Non-hydrolyzable or unknown | 7 |
| Solids | 22 |

**TABLE 2**

| Distillation By-Products | |
|---|---|
| Component | Weight Percent |
| Me₂SiCl₂ | 37 |
| EtMeSiCl₂ | 17 |
| SiCl₄ | 10 |
| Me₃SiCl | 8 |
| MeSiCl₃ | 3 |
| MeHSiCl₂ | 3 |
| AlkylMe₂SiCl | 3 |
| Me₂HSiCl | 2 |
| EtMeSiCl₂ | 1 |
| Non-hydrolyzable or unknown | 16 |

In the above tables, Me denotes methyl, Et represents ethyl, H is hydrogen atom and alkyl refers to any monovalent hydrocarbon that is bonded to silicon. In Table 1, the formulas are presented as empirical formulas.

## Claims

1. A process for treating a plurality of by-product streams comprising chlorosilicon compounds, said process comprising the steps of:
(A) determining the average SiCl functionality of said by-product streams;
(B) then blending at least two of these streams to form a blended by-product stream characterized by having an average SiCl functionality greater than or equal to 2.8;
(C) thereafter adding to the blended by-product stream a surfactant described by formula HO(CH₂CH₂O)ₓ(CH₂CH₃CHO)_{y}(CH₂CH₂O)_{z}H, where x, y and z are selected such that the surfactant has a hydrophobic lipophilic balance number within a range of 3 to 28, and
(D) finally contacting the resultant by-product stream with an aqueous medium at a temperature within a range of 50°C. to 120°C. to yield a granular siloxane gel.

2. A process according to claim 1, where the surfactant is selected from the group of surfactants having the formulae HO(CH₂CH₂O)(CH₂CH₃CHO)₈(CH₂CH₂O)H, HO(CH₂CH₂O)(CH₂CH₃CHO)₈(CH₂CH₂O)₂H, HO(CH₂CH₂O)(CH₂CH₃CHO)₈(CH₂CH₂O)₄H and HO(CH₂CH₂O)₂(CH₂CH₃CHO)₃(CH₂CH₂O)₈H.

3. A process according to claim 1, where the surfactant is nonionic.

4. A process according to any one of the preceding claims, where the surfactant comprises 0.5 to 50 weight percent of the blended by-product stream.

5. A process according to any one of the preceding claims, where the contacting of the blended by-product stream with the aqueous medium is effected at a temperature within a range of 50°C. inclusive, up to the boiling point of the aqueous medium.
